**Europäisches Patentamt**

**European Patent Office**

**Office européen des brevets**

(19)

(11) Numéro de publication: **0 078 730**
**B1**

# (12) FASCICULE DE BREVET EUROPEEN

(45) Date de publication du fascicule du brevet:
**03.07.85**

(51) Int. Cl.⁴: **A 01 M 21/04**

(21) Numéro de dépôt: **82401947.5**

(22) Date de dépôt: **22.10.82**

(54) **Dispositif de traitement de cultures par humectation.**

(30) Priorité: **04.11.81 FR 8120653**

(43) Date de publication de la demande:
**11.05.83 Bulletin 83/19**

(45) Mention de la délivrance du brevet:
**03.07.85 Bulletin 85/27**

(84) Etats contractants désignés:
**AT BE CH DE FR GB IT LI LU NL SE**

(56) Documents cités:
**US - A - 1 368 123**
**US - A - 1 527 669**
**US - A - 1 764 952**
**US - A - 1 896 882**
**US - A - 2 551 096**
**US - A - 3 021 642**
**US - A - 3 077 701**
**US - A - 3 184 888**
**US - A - 3 535 822**
**US - A - 4 291 491**

(73) Titulaire: **TECNOMA, 54, Rue Marcel Paul,**
**F-51206 Epernay (FR)**

(72) Inventeur: **Ballu, Patrick, 4, rue de Lisle, F-51100 Reims**
**(FR)**

(74) Mandataire: **Loyer, Yves et al, CABINET PIERRE**
**LOYER 18, rue de Mogador, F-75009 Paris (FR)**

ACTORUM AG

## Description

Pour certaines cultures, il est parfois préférable de procéder à des traitements tels que le désherbage, par humectation plutôt que par pulvérisation. Ce moyen qui consiste à déposer l'herbicide par contact sur les végétaux à détruire évite de répandre l'herbicide sur les plants à protéger; il a d'autre part l'avantage de permettre l'utilisation sous faible volume de produits concentrés et par suite de diminuer considérablement la consommation d'eau et le volume de liquide à transporter pour réaliser le désherbage d'une surface donnée. Divers autres traitements tels, par exemple, que l'application de régulateurs de croissance, relèvent également de la technique par humectation.

Pour réaliser une telle humectation, il a été proposé d'utiliser des brosses tournantes dont les poils sont irrigués, et qui ont la forme de croix. Mais les poils de ces brosses s'usent et s'arrachent très rapidement.

Une autre proposition (brevet USA 1764952) consiste dans l'emploi de mèches longues et souples dont les extrémités sont retenues dans un réservoir tubulaire horizontal. Cependant, cette disposition ne permet pas de balayer le sol en nappe, car les mèches sont formées de brins ou cordes séparés qui passent par des ouvertures espacées du réservoir.

Il est connu un balayage du sol en nappe (US-A-3535822), mais réalisé par une feuille d'application de l'herbicide, découpée à sa base en mèches plates et longues et appliquée contre la surface externe d'un réservoir tubulaire, au contact de trous de distribution du liquide réglés chacun par une valve. Le liquide est appliqué aux plantes, lorsque ces dernières pressent les mèches contre une contre-plaque disposée le long de la feuille d'application, pour éviter une application du produit par gravité.

Par ailleurs, des réservoirs de distribution tubulaires, munis d'une fente longitudinale de passage d'un moyen d'application du produit, sont connus, mais selon une technique où le moyen d'application est une sorte de tampon, sans présence de mèches (US-A-3021642 et US-A-4291491).

L'invention a pour objet un dispositif simple susceptible d'un emploi manuel ou à partir d'un tracteur, et utilisant le principe connu de mèches longues et souples.

Le dispositif selon l'invention comprend au moins un réservoir tubulaire d'axe horizontal en cours d'emploi à l'intérieur duquel sont emprisonnées les extrémités de mèches souples et douées de propriétés capillaires, et il est caractérisé en ce que ces mèches sont plates, constituées par de la tresse ou du tissu de fibres et sont disposées côte à côte de façon à former une nappe continue, au moins une extrémité des mèches étant emprisonnée dans une fente longitudinale inférieure d'un réservoir étanche contenant l'herbicide, lequel humecte les mèches par capillarité. De façon connue la longueur des mèches est telle que, lorsque l'utilisateur déplace le réservoir à proximité du sol, les fragments de mèches situées hors du réservoir reposent par gravité sur la végétation, de sorte que ces fragments de mèches lèchent la végétation et l'humectent de produit. On obtient ainsi un traitement efficace avec une faible consommation de produit.

Le nombre des mèches, leur disposition et leurs dimensions permettent d'adapter le dispositif aux divers types de surfaces à traiter.

L'invention vise également les dispositions ci-après:

a) La mèche est formée d'une mèche plate repliée sur elle-même en double épaisseur, emprisonnée dans le réservoir par ses extrémités superposées et reposant sur le sol par sa partie repliée sur elle-même.

b) Les extrémités d'un réservoir tubulaire comportent des moyens pour l'emboîtage étanche avec un réservoir semblable et il est prévu des bouchons s'adaptant sur lesdites extrémités de sorte que l'assemblage de plusieurs réservoirs permet de varier la largeur du dispositif.

c) Le tube-réservoir constitue l'élément porteur de l'appareil et il comporte des pattes de fixation latérales pour son adaptation à toute structure appropriée.

d) L'étanchéité d'emprisonnement des mèches est obtenue à la fabrication du tube par injection ou surinjection autour des mèches.

D'autre part, dans ce type de réalisation, il est essentiel de contrôler avec une grande précision le débit du liquide. Un tel contrôle est rendu difficile par la faiblesse des débits (de l'ordre de 0,01 à 0,03 litre minute) et les irrégularités de serrage des mèches à la fabrication.

C'est pourquoi l'invention prévoit également les dispositions suivantes:

e) Le tube-réservoir est alimenté sous pression, de façon discontinue, par quantités successives, par exemple au moyen d'une pompe associée à un distributeur-doseur mécanique ou électromécanique, d'une pompe-doseuse ou tout autre moyen équivalent.

f) Des pulvérisateurs alimentés de la même façon discontinue projettent du liquide sur la partie externe des mèches.

g) Le débit discontinu ainsi obtenu est proportionnel à la vitesse d'avancement du dispositif par entraînement de l'alimentation forcée à partir d'un organe dont la vitesse est proportionnelle à ladite vitesse d'avancement.

Un dispositif manuel est obtenu en reliant les pattes latérales d'au moins un réservoir à un support muni d'un manche ou organe analogue de préhension manuelle.

Un dispositif tracté est obtenu en montant un ou plusieurs éléments réservoirs tubulaires sur une structure portée par le tracteur.

h) Selon une variante préférée de réalisation d'un tel dispositif tracté, la structure portée comprend un ensemble monté fixe, perpendiculairement à l'axe de la structure et des ensembles disposés de part et d'autre de cet axe, inclinés sur cet axe vers l'arrière, et montés pivotants autour de plusieurs axes de rotation à l'encontre d'un rappel élastique de façon à se rabattre le long de la structure, par une combinaison de plusieurs mouvements de rotation commandés l'un par l'autre, lorsqu'ils rencontrent un obstacle, pour reprendre leur position initiale une fois l'obstacle passé.

i) Un élément latéral est monté pivotant en un point voisin de son extrémité proche de l'axe sur une bielle elle-même articulée par son autre extrémité sur la structure de l'appareil, l'extrémité de bielle portant ainsi l'ensemble pivotant est repoussée à distance de la structure par un ressort ou l'équivalent et il est prévu une corde ou un câble reliant l'autre extrémité de ladite bielle à l'extrémité de l'élément la plus proche de l'axe en s'enroulant sur une poulie portée par la structure.

L'invention est plus amplement décrite avec référence au dessin annexé sur lequel:

Les fig. 1 et 2 représentent schématiquement en coupe transversale et en élévation le dispositif selon l'invention;

Les fig. 3 et 4 sont une vue en coupe axiale horizontale et en coupe selon A-A de la fig. 3 d'un mode de réalisation du réservoir des fig. 1 et 2;

Les fig. 5 et 6 sont une vue en coupe axiale verticale et en bout d'un mode de réalisation d'un élément réservoir formé de plusieurs tronçons de tube selon les fig. 3 et 4;

Les fig. 7 à 9 illustrent schématiquement un dispositif manuel en coupe partielle transversale et en élévation;

La fig. 10 illustre schématiquement en plan un dispositif tracté à plusieurs éléments dont certains pivotants, à gauche en position de repli, à droite en cours de mouvement d'effacement;

La fig. 11 est une vue analogue à la fig. 10, des éléments pivotants en position déployée;

La fig. 12 est une vue en coupe schématique selon A-A de la fig. 10 de l'appareil des fig. 10 et 11;

La fig. 13 est une vue analogue à la fig. 1 avec alimentation forcée et discontinue;

Les fig. 14 et 15 sont des variantes de la fig. 1;

La fig. 16 illustre schématiquement une pompe doseuse pour l'alimentation du dispositif des fig. 13 à 15;

La fig. 17 illustre schématiquement une pompe péristaltique pour l'alimentation selon les fig. 13 ou 14;

Les fig. 18 et 19 illustrent un distributeur mécanique pour réaliser un débit discontinu.

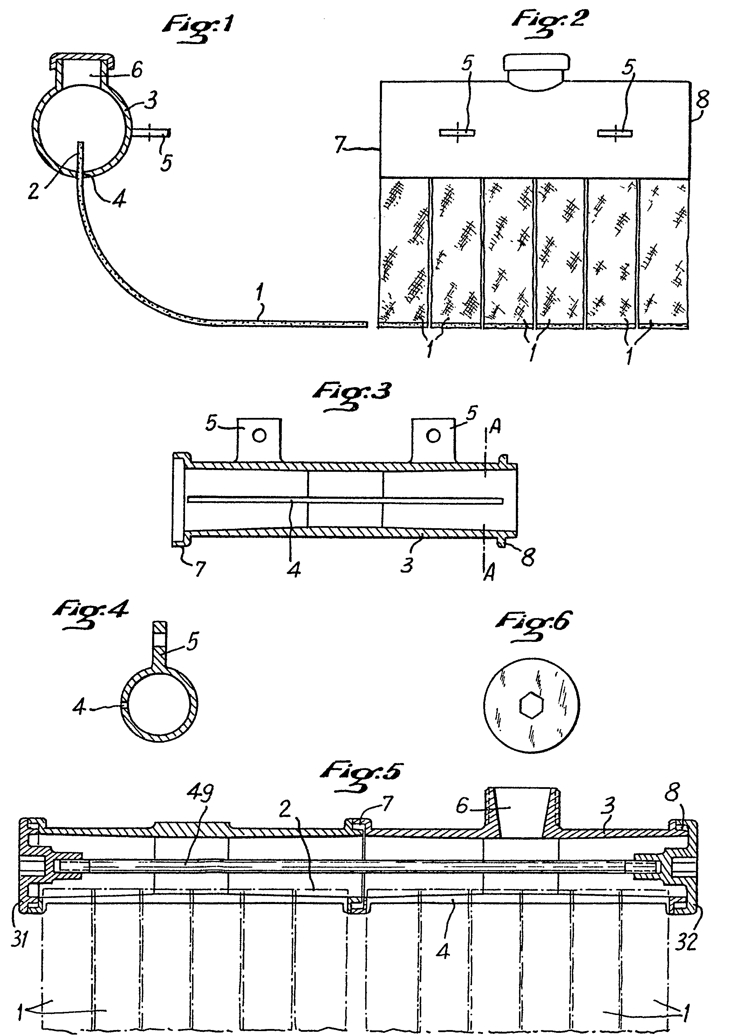

En se reportant aux fig. 1 et 2, on voit que le dispositif selon l'invention se compose, dans sa partie principale, de mèches souples et plates 1 disposées en série côte à côte dont l'une des extrémités 2 est emprisonnée de façon étanche en 4 dans un réservoir 3, destiné à contenir le liquide herbicide. Les mèches 1 sont constituées en un matériau capillaire et résistant tel qu'une tresse ou tissu de fibres. En variante, leurs deux extrémités peuvent être superposées et emprisonnées ensemble dans le réservoir 3 et l'ensemble a alors la forme d'une mèche plate d'épaisseur double emprisonnée par une extrémité et dont l'autre extrémité a la forme d'une anse aplatie. Cette forme de réalisation réduit l'effilochage en bout de mèche.

Conformément à l'invention, les mèches 1 doivent être plates, souples, capillaires et résistantes à l'usure.

Du fait de leur souplesse, elles se disposeront selon la fig. 1, leur extrémité libre reposant sur le sol ou la végétation, de sorte que, lorsque l'appareil est déplacé, elles effleurent ou balayent les végétaux avec une faible friction et déposent sur ceux-ci le liquide dont elles sont imprégnées par capillarité. Du fait qu'elles sont plates et disposées côte à côte (fig. 2), elles forment un rideau ou une nappe qui s'étale de façon régulière et jointive sur la végétation en épousant les irrégularités du sol mais sans risque de s'y accrocher.

L'expérience montre que l'on obtient par ce moyen une efficace humectation des végétaux avec une très faible consommation de liquide et une très faible usure des mèches.

La largeur de mèches sera de préférence faible par rapport à leur longueur et celle-ci sera suffisante, compte tenu de la hauteur moyenne au-dessus du sol que l'on aura prévue pour le réservoir 3, pour qu'elles reposent sur la végétation sur environ un tiers ou la moitié de leur longueur. Cette longueur de contact souple est en effet une condition de bon fonctionnement de l'invention.

Une longueur de mèche (partie externe) comprise entre environ 1 à 3 décimètres convient dans la plupart des cas.

Le réservoir 3 a de préférence la forme d'un tronçon de tube horizontal, fermé à ses extrémités, pourvu d'un orifice de remplissage 6, constituant l'élément porteur du dispositif, pourvu de pattes latérales de fixation 5, les mèches 1 étant alignées selon au moins une génératrice inférieure du tube 3 et emprisonnées dans au moins une fente longitudinale 4.

On peut, en variante, prévoir plusieurs fentes 4 parallèles et plusieurs rangées de mèches 1.

Comme représenté fig. 3 à 6, dans une forme préférée de réalisation de l'invention, les tubes 3 sont réalisés avec des extrémités 7 et 8 ouvertes et munies de moyen de raccordement étanche de type connu en soi de sorte que l'on peut réaliser un élément par la réunion de plusieurs tronçons de tubes 3, ce qui donne une grande souplesse au dispositif. Des bouchons d'extrémités 31, 32 sont prévus pour s'adapter de façon étanche aux extrémités d'un tube ou d'un ensemble de tubes-réservoirs 3.

Dans l'exemple représenté, une tige interne 49, filetée à ses extrémités, coopère avec les bouchons 31, 32 pour assurer le serrage étanche des tubes et des bouchons, lesquels portent sur leur face externe un moyen de serrage tel qu'un boulon ou un logement creux polygonal.

Cette disposition permet d'adapter la dimension de balayage du dispositif selon les cultures, ce qui est particulièrement avantageux.

Les tubes 3 et les bouchons qui s'adaptent éventuellement aux extrémités 7 et 8 peuvent être fabriqués en un matériau transparent ou translucide laissant apparaître le niveau du liquide.

De préférence, les tubes 3 seront réalisés en matière plastique moulée par injection, de sorte que les pièces de fixation, les fentes de passage des mèches et les moyens de raccordement sont réalisés en une seule opération.

Le dispositif de l'invention peut être réalisé comme appareil manuel ou appareil monté sur tracteur.

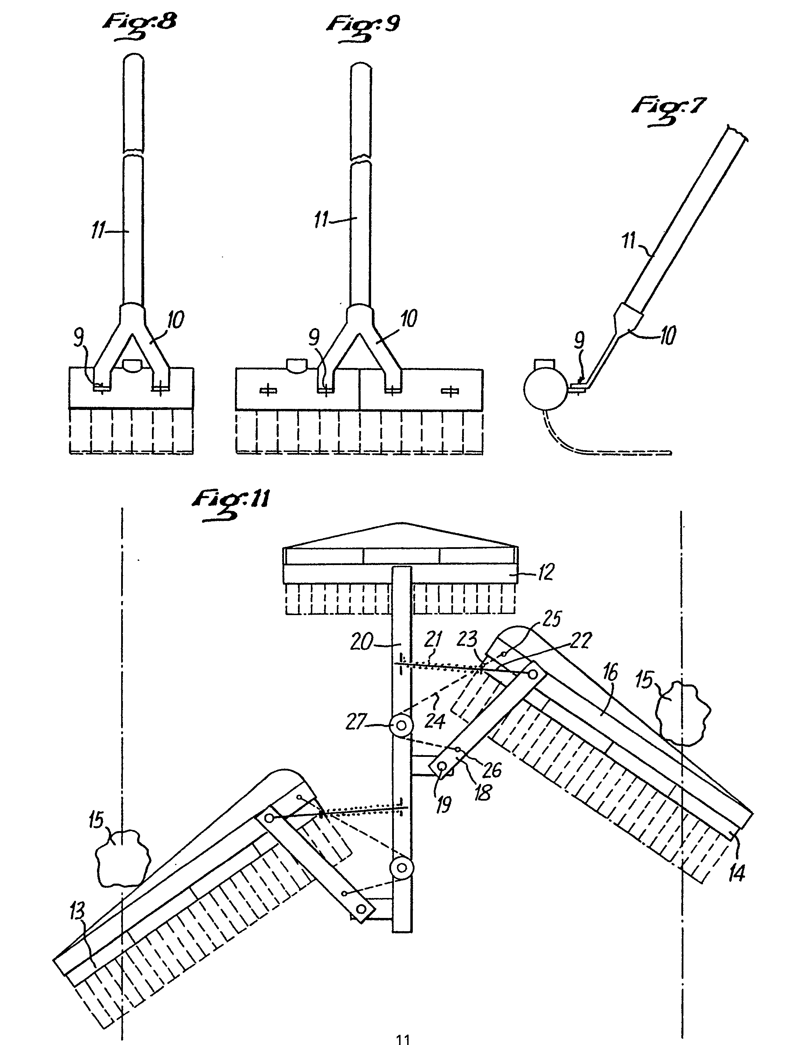

Les fig. 7, 8 et 9 montrent un exemple de réalisation d'appareil manuel.

Celui-ci est composé d'un tube réservoir 3 fixé en 9 au moyen de pattes de fixation 5 à un support 10 muni d'un manche 11 ou tout autre moyen de préhension (poignées, etc.).

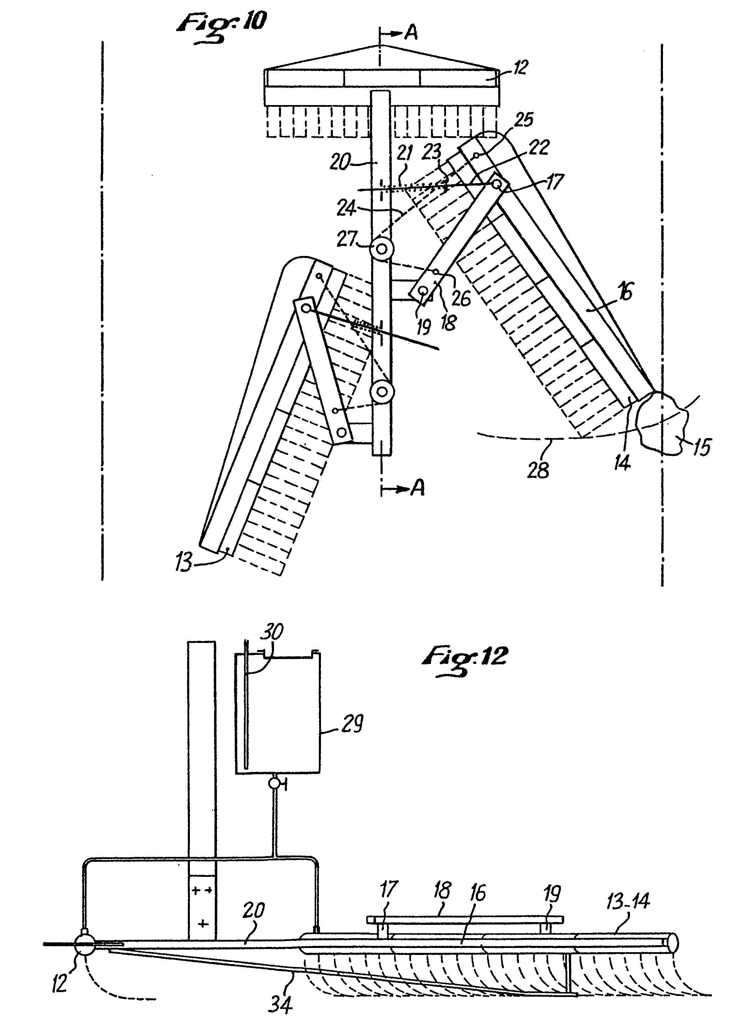

Comme représenté fig. 9, l'appareil peut être équipé d'un ou de plusieurs tronçons de tubes mis bout à bout. A cet effet, la distance entre deux pattes 5 portées par un tube élémentaire est double de la distance séparant une patte de l'extrémité voisine, de telle sorte que le même support 10 puisse servir pour un tube unique ou un assemblage de deux tubes.

Un pied, non représenté, peut être adapté à chaque extrémité du tube 3 pour que celui-ci puisse être traîné sans effort à distance du sol.

Les fig. 10 à 12 illustrent un exemple d'appareil destiné à être sur tracteur.

Cet appareil comporte plusieurs ensembles d'éléments montés sur une structure ou armature de support 20, chaque élément pouvant comporter une pluralité de tubes 3.

Un premier ensemble 12 est monté fixe dans l'axe de l'armature 20, ou de façon à être déplacé dans la zone centrale entre deux rangs de plants de pieds 15 de la culture à désherber.

De part et d'autre de cet axe sont prévus des ensembles chacun monté pivotant autour de plusieurs axes de rotation, de façon à permettre l'extension du traitement jusqu'aux rangs de plants tout en assurant l'effacement rapide de ces ensembles lorsqu'ils rencontrent un plant 15 par une combinaison de plusieurs mouvements de rotation commandés l'un par l'autre pour se remettre en position initiale sous l'effet d'un moyen de rappel élastique dès que ce plant 15 (ou pied de culture) est dépassé, afin que le produit soit déposé sur toute la surface du sol.

Divers moyens mécaniques peuvent être adoptés pour ce montage à plusieurs axes de pivotement combinés avec rappel élastique.

Dans l'exemple représenté, chaque ensemble latéral 13, 14 comporte un bras de support 16 monté pivotant autour d'un axe 17 voisin de son extrémité proche de la zone centrale. Cet axe 17 est lui-même monté pivotant à l'extrémité d'une bielle 18 dont l'autre extrémité 19 est pivotante sur la structure centrale de support 20. Un ressort 21 ou l'équivalent repousse constamment l'extrémité 17 de la bielle 18 en position écartée de l'axe central. Le ressort 21 est guidé sur un axe 22 et comprimé entre le support central 20 et une butée 23 portée par l'axe 22.

Le bras 16 est positionné par rapport à la bielle 18 par une corde ou un câble 24, fixé à une extrémité en 25 sur l'extrémité du bras 16 proche de l'axe et à l'autre extrémité en 26 sur la bielle 18 et s'enroulant autour d'une poulie 27 pivotant sur un axe solidaire du bâti central 20.

La position initiale des bras 16 est de préférence un peu inclinée vers l'arrière de l'appareil par rapport à la perpendiculaire transversale à son axe.

Quand le bras 16 arrive au contact d'un pied de vigne 15, son inclinaison initiale par rapport au sens d'avancement favorise son effacement vers le bâti central.

Au cours de la rotation du bras 16 autour de l'axe 17, celui-ci tire sur la corde 24 qui, à son tour, tire la bielle 18 vers le bâti central 20. Ce mouvement permet de déplacer l'axe 17 et de donner au bras 16 par un mouvement rapide, une position presque perpendiculaire au sens d'avancement (comme indiqué par le tracé 28) tout en assurant une couverture maximale lorsque le bras est déployé.

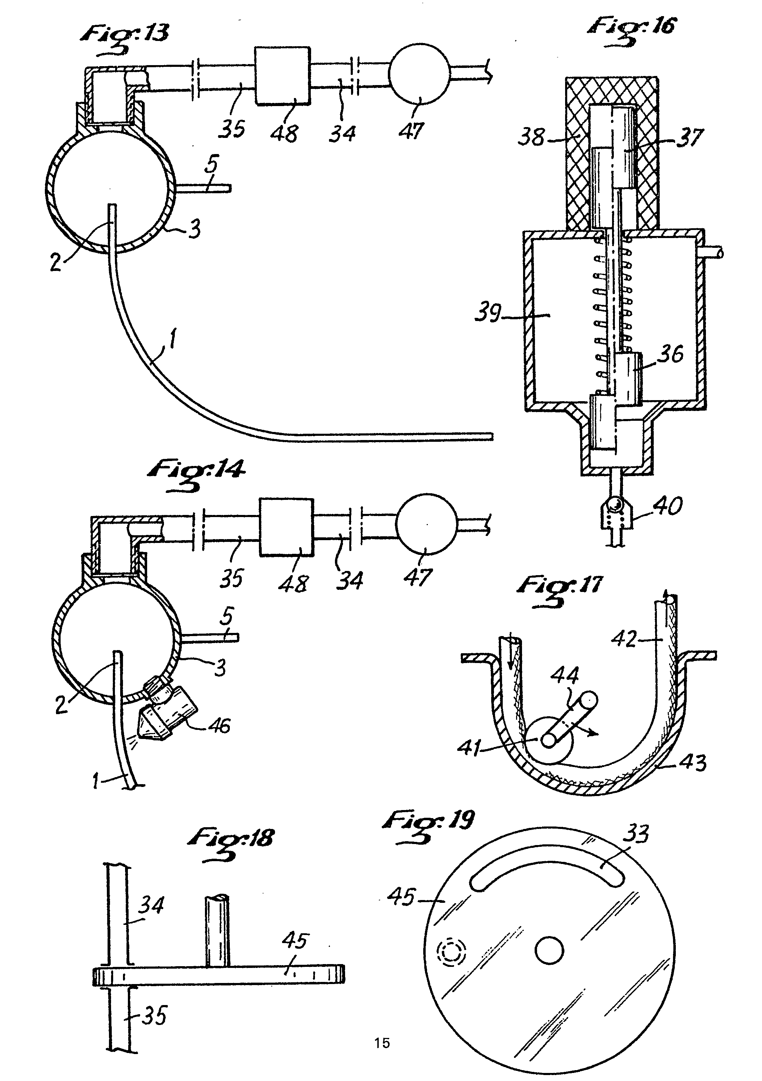

La fig. 11 montre l'ouverture maximum de l'appareil en fonction d'une largeur de plantation donnée.

La fig. 10 illustre sur sa partie gauche la position de repli maximum et sur sa partie droite le mouvement du bras 16 au contact d'un pied 15.

Comme représenté fig. 12, la structure 20 comporte avantageusement au moins un patin inférieur 34 qui repose sur le sol et maintient les éléments 12, 13 et 14 à distance prédéterminée du sol.

L'autonomie de l'appareil dépend de la contenance des réservoirs 3. Pour augmenter cette autonomie, l'invention prévoit d'adjoindre à l'appareil un réservoir 29 alimentant les trois éléments 12, 13, 14 par toutes canalisations appropriées.

Il va de soi que le dispositif tracté représenté ne constitue qu'un exemple de réalisation de l'invention qui peut revêtir d'autres formes ou employer d'autres moyens. Par exemple, le ressort 21 peut être remplacé par tout système de rappel élastique et le montage sur bras oscillant peut être réalisé selon une géométrie différente, pour autant que soient prévus plusieurs pivotements qui se commandent l'un l'autre et assurent ainsi un effacement rapide.

Les fig. 13 à 19 se rapportent à la réalisation du contrôle rigoureux du débit de liquide à travers les mèches 1. En effet ce débit doit être très faible (de l'ordre de 0,01 à 0,03 litre par minute) et la mise en place des mèches 1 dans les tubes réservoirs 3 par surinjection de plastique rend difficile d'obtenir de façon industrielle des débits contrôlés si l'on utilise seulement la gravité et la capillarité.

Pour cette raison l'invention prévoit une alimentation à la fois forcée et discontinue des réservoirs 3 par le moyen d'une pompe 47 associée à un distributeur 48.

Dans le cas de la fig. 13 une alimentation forcée et discontinue est ainsi apportée au réservoir 13 ce qui force le liquide à travers les fentes 4, son écoulement dans les mèches 1 se poursuivant par capillarité.

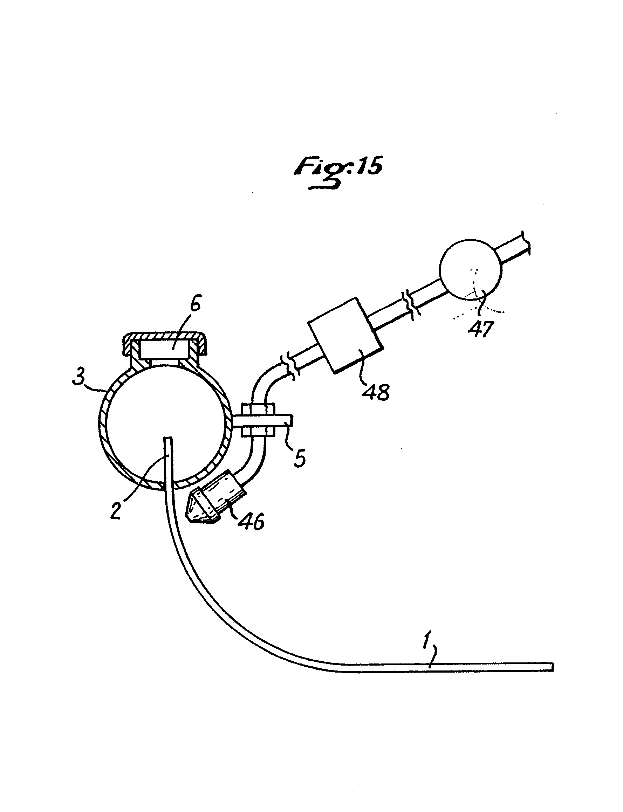

Dans le cas des fig. 14 et 15, on a prévu des pulvérisateurs 46 répartis sur la largeur de la mèche 1 de façon à assurer une bonne répartition (par exemple tous les 150 mm), ces pulvérisateurs étant alimentés par l'ensemble pompe-distributeur 47, 48, soit directement (fig. 15), soit par l'intermédiaire du réservoir 3 (fig. 14).

Dans l'exemple représenté, les pulvérisateurs sont montés sur les réservoirs 3 de façon à pulvériser le liquide dans la zone des mèches 1 en aval des fentes 4, c'est-à-dire sur la partie des mèches 1 situées à l'air libre. Le débit, contrôlé par l'ensemble 47, 48, se divise entre un débit par les fentes 4 et un débit par les pulvérisateurs 46 dont la somme reste constante. A la limite, le débit peut être entièrement assuré par les pulvérisateurs 46, le tube 3 servant seulement à supporter les mèches.

La pompe 31 pourra être de tout type approprié et entraînée par moteur électrique, thermique, pneumatique hydraulique par la prise de force du tracteur ou par une roue de l'appareil ou du tracteur.

Le distributeur 48 sera une électrovanne alimentée par impulsions séquentielles réglables mais pourra également être réalisé sous forme mécanique par exemple comme représenté fig. 18 et 19. Ces moyens sont en eux-mêmes connus et ne nécessitent pas de description détaillée. Le dispositif des fig. 18, 19 consiste en un disque tournant 45, muni d'une lumière 33 faisant communiquer à chaque tour les tubes 34 et 35 pendant une durée déterminée.

La pompe 47 et le distributeur 48 pourront être réunis en un organe unique constituant à la fois pompe et doseur comme représenté fig. 16 et 17.

Dans le cas de la fig. 16, il s'agit d'une pompe à piston 36 animé par le plongeur 37 d'un électroaimant 38. Dans sa position haute (partie droite de la fig. 16) le piston 36 dégage l'arrivée de liquide en provenance du réservoir 39. Un clapet antiretour 40 est prévu en aval de la pompe-doseuse.

Dans le cas de la fig. 17, on utilise une pompe péristaltique constituée d'un galet 41 roulant sur une partie souple 42 du conduit d'amenée du liquide, cette partie souple 42 étant contretenue par une coquille 43. Le galet 41 est monté sur un bras rotatif 44.

Selon une disposition préférée de l'invention, le débit discontinu ainsi obtenu est proportionnel à la vitesse d'avancement de l'appareil. Ceci est obtenu par une liaison entre les roues de l'appareil ou du tracteur et le distributeur 48 ou la pompe-doseuse des fig. 15 et 16. Dans le premier cas, l'électrovanne 48 est alimentée à partir d'un séquenceur entraîné par les roues de l'appareil ou du tracteur (ou le distributeur 32, 34 des fig. 18, 19 est entraîné de la même façon).

Dans le second cas, c'est la pompe des fig. 16 ou 17 qui est entraînée à partir des roues de l'appareil ou du tracteur.

## Revendications

1. Dispositif de traitement de cultures par humectation comprenant au moins un réservoir (3) tubulaire d'axe horizontal en cours d'emploi à l'intérieur duquel sont emprisonnées les extrémités de mèches (1) souples et douces de propriétés capillaires dont la longueur externe du réservoir est telle que ces mèches reposent et s'étendent sur la végétation sur une partie substantielle de leur longueur, caractérisé en ce que les mèches sont plates, constituées par de la tresse ou du tissu de fibres, et en ce qu'au moins une extrémité (2) de chaque mèche (1) est emprisonnée, côte à côte avec celles des mèches adjacentes dans au moins une fente (4) longitudinale inférieure dudit réservoir, de façon que ces mèches forment une nappe continue.

2. Dispositif selon la revendication 1, caractérisé en ce que la mèche est formée d'une mèche plate repliée sur elle-même en double épaisseur, emprisonnée dans le réservoir par ses extrémités superposées et reposant sur le sol par sa partie repliée sur elle-même.

3. Dispositif selon l'une quelconque des revendications précédentes, caractérisé en ce que l'emprisonnement étanche des mèches (1) est obtenu à la fabrication par injection ou surinjection autour des mèches.

4. Dispositif selon l'une quelconque des revendications précédentes, caractérisé en ce que le réservoir (3) est constitué d'une pluralité de tronçons de tube (3) dont les extrémités sont ouvertes et comportent des moyens de raccordement étanches avec un tronçon semblable.

5. Dispositif selon la revendication 4, caractérisé en ce que le raccordement des tronçons de tube est obtenu au moyen d'une tige interne (49) d'assemblage et de serrage sur les extrémités filetées de laquelle sont vissés des bouchons (31 et 32) s'adaptant de façon étanche sur les extrémités externes des tronçons extrêmes du réservoir tubulaire (3).

6. Dispositif selon l'une quelconque des revendications précédentes, caractérisé en ce que le réservoir tubulaire (3) est alimenté sous pression, de façon discontinue, soit directement, soit par une alimentation séparée.

7. Dispositif selon la revendication 6, caractérisé en ce qu'il comporte des pulvérisateurs (46) montés sur le réservoir tubulaire (3), disposés de façon à projeter du liquide sur la partie externe des mèches (1), le tube réservoir étant alimenté sous pression par quantités dosées successives au moyen d'un ensemble pompe-doseur (47, 48).

8. Dispositif selon l'une quelconque des revendications précédentes, caractérisé en ce qu'il comporte des pulvérisateurs (46), disposés de façon à projeter du liquide sur la partie externe des mèches (1), lesdits pulvérisateurs étant alimentés sous pression par quantités dosées successives au moyen d'un ensemble pompe-doseur (47, 48).

9. Dispositif selon l'une quelconque des revendications 6 à 8, caractérisé en ce que le débit discontinu de l'ensemble pompe-doseur (47, 48) est proportionnel à la vitesse d'avancement de l'appareil.

10. Dispositif manuel de traitement selon l'une quelconque des revendications précédentes, caractérisé en ce qu'il est formé d'un réservoir (3) à mèches fixé sur un support (10) muni d'un moyen de préhension (11) tel qu'un manche.

11. Dispositif de traitement destiné à être tracté ou monté sur tracteur, selon l'une quelconque des revendications 1 à 9, caractérisé en ce qu'il comporte plusieurs ensembles de réservoirs (3) à mèches (1) montés sur une structure de support (20), certains de ces ensembles (12) étant montés fixes dans l'axe de cette structure et perpendiculairement à cet axe, certains autres (13, 14) étant montés latéralement audit axe et pivotant selon plusieurs axes de rotation à l'encontre d'un rappel élastique (21), de façon à se rabattre le long de la structure lorsqu'il rencontrent un obstacle (15), par une combinaison de plusieurs mouvements de rotation commandés l'un par l'autre, pour reprendre leur position initiale une fois l'obstacle passé.

12. Dispositif selon la revendication 11, caractérisé en ce qu'un élément latéral (13, 14), pouvant être composé de plusieurs réservoirs (3), est monté sur un bras (16) pivotant en un point (17), voisin de son extrémité proche de l'axe de la structure (20), sur une bielle (18) elle-même articulée par son autre extrémité (19) sur la structure (20), l'extrémité correspondant au point (17) de la bielle (18) étant repoussée élastiquement à distance de la structure (20) par un rappel élastique (21), et en ce qu'il est prévu une corde (24) reliant en un point (26) l'autre extrémité (19) de la bielle (18) à l'extrémité du bras (16) la plus proche de l'axe de la structure (20) en s'enroulant sur une poulie (27) portée par ladite structure.

13. Dispositif selon l'une quelconque des revendications 11 et 12, caractérisé en ce que la structure (20) comporte au moins une pièce (34) reposant sur le sol et maintenant au moins un réservoir (3) à distance réglable du sol.

14. Dispositif selon l'une quelconque des revendications précédentes, caractérisé en ce que le réservoir (3) porte-mèches (1) est réalisé en matière suffisamment translucide pour que le niveau du réservoir soit apparent de l'extrérieur.

## Claims

1. Apparatus for treating cultures by humectation, comprising at least one tubular tank (3), with horizontal axis during use, in which are tightly held the extremities of flexible and soft wicks, with capillary properties whose length outside the tank is such that these wicks rest and extend over the growth over a substantial part of their length. The wicks are flat, made up of fiber braid or fabric, and, on at least one extremity (2) of each wick (1), is tightly held, side by side, with the extremities of the adjacent wicks, in at least one longitudinal lower slot (4) in the said tank, in order that these wicks form a continuous sheet.

2. Apparatus according to claim 1, whose wick is made up of a flat wick, folded on itself in double thickness, tightly held in the tank by its superposed extremities, and resting on the bottom by its part folded back on itself.

3. Apparatus according to any one of the preceding claims, the tight hold of its wicks (1) of which is obtained at manufacture by injecting or overinjecting around the wicks.

4. Apparatus according to any one of the preceding claims, whose tank (3) consists of a great number of tube sections (3) whose ends are open and have means for leaktight connection with a similar section.

5. Apparatus according to claim 4, whose tube section connection is obtained by means of an internal assembly and tightening rod (49) on whose threaded ends are screwed plugs (31 and 32) adapted in a leaktight way on the outside extremities of the outside sections of the tubular tank (3).

6. Apparatus according to any one of the preceding claims, whose tubular tank (3) is fed under pressure, discontinuously, either directly, or by a separate feed.

7. Apparatus according to claim 6, which has sprayers (46) mounted on the tubular tank (3), arranged so as to spray liquid on the outside part of the wicks (1), with the tank tube being fed under pressure by successive metered quantities by means of a metering pump unit (47, 48).

8. Apparatus according to any of the preceding claims, which has sprayers (46), arranged so as to spray liquid onto the outside part of the wicks (1), these sprayers being fed under pressure by successive metered quantities by means of a metering pump unit (47, 48).

9. Apparatus according to claims 6 through 8, whose discontinuous flow from the metering pump unit (47, 48) is proportional to the unit's advance speed.

10. Manual treatment unit according to any of the preceding claims, made up of a tank (3) with wicks fastened to a support (10), fitted with a holding device (11) such as a sleeve.

11. Treatment unit designed to be drawn or installed on tractor, according to any one of claims 1 through 9, which has several tank units (3) with wicks (1), mounted on a support structure (20), certain of these units (12) being mounted fastened within the axis of this structure and perpendicular to this axis, while others are installed laterally in relation to the said axis and pivoting along several rotation axes due to an elastic drawback (21), in order to be moved back along the structure when they encounter an obstacle (15), by a combination of several rotary movements, each actuated by the other, to go back to their initial position once the obstacle has passed by.

12. Apparatus according to claim 11, whose lateral element (13, 14), which can be made up of several tanks (3), is mounted on an arm (16), pivoting in a point (17), close to its extremity near the axis of the structure (20), on a connecting rod (18), itself articulated by its other extremity (19) on the structure (20), the extremity corresponding to the point (17) of the connecting rod (18) being pushed back elastically to some distance from the structure (20), by an elastic drawback (21), which has a cord (24), at one point (26), linking the other extremity (19) of the connecting rod (18) to the extremity of the arm (16) which is closest to the axis of the structure (20), winding around a pulley (27), carried by the said structure.

13. Apparatus according to claim 11 or 12, whose structure (20) has at least part (34) resting on the ground, and holding at least one tank (3) at an adjustable distance from the ground.

14. Apparatus according to any of the preceding claims, whose wick holder (1) tank (3) is built using a material which is translucent enough so that the tank level is visible from the outside.

**Patentansprüche**

1. Einrichtung zur Benetzung von Kulturen mit mindestens einem rohrförmigen Behälter (3) von während des Betriebs horizontaler Achse, worin die Enden von elastischen, weichen, Kapillareigenschaften besitzenden Dochten (1) eingeschlossen sind, deren Länge ausserhalb des Behälters so bemessen ist, dass die Dochte auf den Pflanzen liegen und sich mit einem beträchtlichen Teil ihrer Länge über diese erstrecken, wobei die Einrichtung dadurch gekennzeichnet ist, dass die Dochte flach sind und aus Fasergeflecht oder -gewebe bestehen, sowie dadurch, dass mindestens ein Ende (2) jedes Dochts (1) Seite an Seite mit den Enden der benachbarten Dochte in mindestens einem untenliegenden Langloch (4) des Behälters eingeschlossen ist, so dass die Dochte eine durchgehende Fläche bilden.

2. Einrichtung gemäss Anspruch 1, dadurch gekennzeichnet, dass der Docht aus einem doppelt übereinandergeschlagenen flachen Docht besteht, der mit den übereinanderliegenden Enden in den Behälter eingeschlossen ist und mit dem übereinandergeschlagenen Teil auf dem Boden liegt.

3. Einrichtung gemäss den oben beschriebenen Ansprüchen, dadurch gekennzeichnet, dass die dichte Einschliessung der Dochte (1) bei der Herstellung durch Spritzung bzw. Umspritzung der Dochte erzielt wird.

4. Einrichtung gemäss den oben beschriebenen Ansprüchen, dadurch gekennzeichnet, dass der Behälter (3) aus einer Anzahl Rohrteilstücken (3) besteht, deren Enden offen und mit Mitteln zur dichten Verbindung mit einem gleichartigen Rohrteilstück versehen sind.

5. Einrichtung gemäss Anspruch 4, dadurch gekennzeichnet, dass die Verbindung der Rohrteilstücke durch eine innenliegende Verbindungs- und Zugstange (49) erzielt wird, auf deren Gewindeenden Verschlüsse (31 und 32) aufgeschraubt werden, die dicht auf die äusseren Enden der äusseren Teilstücke des Rohrbehälters (3) passen.

6. Einrichtung gemäss den oben beschriebenen Ansprüchen, dadurch gekennzeichnet, dass der Rohrbehälter (3) unter Druck, diskontinuierlich, entweder direkt oder durch eine getrennte Speisequelle gespeist wird.

7. Einrichtung gemäss Anspruch 6, dadurch gekennzeichnet, dass sie Zerstäuber (46) umfasst, die auf den Rohrbehälter (3) montiert und so angeordnet sind, dass sie Flüssigkeit aussen auf die Dochte (1) spritzen, wobei der Rohrbehälter unter Druck über eine Dosierpumpe (47, 48) mit sukzessive dosierten Mengen gespeist wird.

8. Einrichtung gemäss den oben beschriebenen Ansprüchen, dadurch gekennzeichnet, dass sie Zerstäuber (46) umfasst, die so angeordnet sind, dass sie Flüssigkeit aussen auf die Dochte (1) spritzen, wobei die Zerstäuber unter Druck über eine Dosierpumpe (47, 48) mit sukzessive dosierten Mengen gespeist werden.

9. Einrichtung gemäss den Ansprüchen 6-8, dadurch gekennzeichnet, dass die diskontinuierliche Ausströmmenge der Dosierpumpe (47, 48) zu der Geschwindigkeit der Vorwärtsbewegung des Geräts proportional ist.

10. Handbetriebene Benetzungseinrichtung gemäss den oben beschriebenen Ansprüchen, dadurch gekennzeichnet, dass sie aus einem Behälter (3) mit Dochten besteht, der an einer Halterung (10) befestigt ist, die mit einem Mittel zum Halten (11), etwa einer Stange, ausgestattet ist.

11. Benetzungsvorrichtung, dazu bestimmt, gezogen oder auf einen Schlepper montiert zu werden, gemäss den Ansprüchen 1-9, dadurch gekennzeichnet, dass sie mehrere aus einem Behälter (3) mit Dochten (1) bestehende Elemente umfasst, die auf eine Haltekonstruktion (20) montiert sind, wobei einige dieser Elemente (12) auf der Achse der Haltekonstruktion senkrecht zu dieser Achse fest angebracht sind, während andere (13, 14) seitlich von der Achse in mehreren Drehachsen schwenkbar und mit einer elastischen Rückstellvorrichtung (21) ausgestattet sind, so dass sie sich aufgrund einer Kombination mehrerer, gegeneinander zwangsschlüssiger Bewegungen in Längslage zu der Konstruktion herumklappen, wenn sie auf ein Hindernis (15) treffen, und ihre ursprüngliche Lage wieder einnehmen, sobald sie das Hindernis passiert haben.

12. Einrichtung gemäss Anspruch 11, dadurch gekennzeichnet, dass jedes seitliche Element (13, 14) auf einen Arm (16) montiert ist, der sich in einem Punkt (17) nahe dem der Achse der Konstruktion (20) nächstliegenden Ende des Arms auf einem Zwischenglied (18) dreht, das mit dem anderen Ende (19) auf der Konstruktion (20) frei beweglich angebracht ist, wobei das dem Punkt (17) entsprechende Ende des Zwischenglieds (18) durch die elastische Rückstellvorrichtung (21) elastisch von der Konstruktion (20) weggeschoben wird, und dadurch, dass ein Seil (24) vorgesehen ist, das in einem Punkt (26) das andere Ende (19) des Zwischenglieds (18) mit dem der Achse der Konstruktion (20) am nächsten liegenden Ende des Arms (16) verbindet, wobei es über eine Rolle (27) geführt wird, die an der Konstruktion befestigt ist.

13. Einrichtung gemäss den Ansprüchen 11 und 12, dadurch gekennzeichnet, dass die Konstruktion (20) mindestens ein Teil (34) umfasst, das auf dem Boden ruht und mindestens einen Behälter (3) auf verstellbarer Entfernung zum Boden hält.

14. Einrichtung gemäss den oben beschriebenen Ansprüchen, dadurch gekennzeichnet, dass der die Dochte (1) tragende Behälter (3) aus einem Werkstoff ausgeführt ist, dessen Durchsichtigkeit ausreicht, dass der Stand des Inhalts des Behälters von aussen sichtbar ist.

0 078 730

Fig:1

Fig:2

Fig:3

Fig:4

Fig:6

Fig:5

**Fig:8**

11
9 10

**Fig:9**

11
9 10

**Fig:7**

11
9 10

**Fig:11**

12
20 21 23 22 25 16 15
27 24 26
19 18
15
13 14

11

*Fig. 10*

A

12

25

22

20 21 23

17

24

27

26

16

19 18

13

28 14 15

A

30

*Fig. 12*

29

17 18 16 19 13 14

20

+ +

+

12

34

Fig:13

Fig:16

Fig:14

Fig:17

Fig:18

Fig:19

Fig.15